# EUROPÄISCHE PATENTSCHRIFT

(11) **EP 2 377 234 B1**
(45) Veröffentlichungstag und Bekanntmachung des Hinweises auf die Patenterteilung: **10.10.2018**
(21) Anmeldenummer: 09780107.0
(22) Anmeldetag: 02.07.2009
(51) Int. Cl.: H02M 7/48, H02M 1/00

(54) **TRANSFORMATORLOSER WECHSELRICHTER MIT EINEM DC/DC-WANDLER**
TRANSFORMERLESS INVERTER HAVING A DC/DC CONVERTER
ONDULEUR SANS TRANSFORMATEUR AVEC UN CONVERTISSEUR DC/DC

(30) Priorität: 20.12.2008 EP 08022223
(43) Veröffentlichungstag der Anmeldung: 19.10.2011
(73) Patentinhaber: SMA Solar Technology AG, 34266 Niestetal (DE)
(72) Erfinder: RIGBERS, Klaus, 34121 Kassel (DE); MALLWITZ, Regine, 34131 Kassel (DE); ENGEL, Bernd, 38302 Wolfenbüttel (DE); ZACHARIAS, Peter, 34131 Kassel (DE)
(86) Internationale Anmeldenummer: PCT/EP2009/058363
(87) Internationale Veröffentlichungsnummer: WO 2010/069620

(56) Entgegenhaltungen:
- EP-A- 2 023 475
- EP-A2- 1 143 594
- WO-A-01/80411
- CA-A1- 2 431 689
- GB-A- 2 419 968
- KLAASSENS J B: "Power Conditioning with a Switched Series-Resonant Circuit Operating at a High Internal Frequency" TELECOMMUNICATIONS ENERGY CONFERENCE, 1987. INTELEC '87. THE NINTH INTERNATIONAL, IEEE, PISCATAWAY, NJ, USA, 14. Juni 1987 (1987-06-14), Seiten 193-203, XP031432892 ISBN: 978-91-7810-916-6

## Beschreibung

### TECHNISCHES GEBIET DER ERFINDUNG

Die Erfindung betrifft einen transformatorlosen Wechselrichter zur Einspeisung elektrischer Energie von einer Gleichstromquelle in ein Wechselstromnetz, mit einer Wechselrichterbrücke und mit einem der Wechselrichterbrücke vorgeschalteten DC/DC-Wandler und den weiteren Merkmalen des Oberbegriffs des unabhängigen Patentanspruchs 1.

Bei der Gleichstromquelle kann es sich insbesondere um eine Photovoltaikanlage, beispielsweise in Form eines einzelnen oder mehrerer Photovoltaikpaneele handeln. Die Gleichstromquelle kann aber auch ein Kondensator sehr großer Kapazität, ein sogenannter Supercap, ein Gleichspannungsgenerator, ein Brennstoffzellenstack oder dergleichen sein. Das Wechselstromnetz, in das elektrische Energie von der Gleichstromquelle eingespeist wird, kann ein einphasiges oder mehrphasiges, insbesondere dreiphasiges Wechselstromnetz sein. Es kann sich bei dem Wechselstromnetz sowohl um ein öffentliches Stromnetz als auch ein Inselstromnetz als auch jede darüber hinaus denkbare Variante eines Stromnetzes handeln.

Indem die Eingangsleitungen des Wechselrichters und die Eingangsleitungen der Wechselrichterbrücke bei einem Wechselrichter mit den Merkmalen des Oberbegriffs des unabhängigen Patentanspruchs 1 auf kapazitive Weise galvanisch voneinander getrennt sind, befasst sich die Erfindung speziell mit solchen Wechselrichtern, die auch ohne zwischengeschalteten Transformator eine galvanische Trennung der Gleichstromquelle von dem Wechselstromnetz, in das eingespeist wird, bereitstellen, d. h. mit transformatorlosen Wechselrichtern.

Soweit in der Definition der Merkmale der vorliegenden Erfindung, wie beispielsweise im Oberbegriff des unabhängigen Patentanspruchs 1, die Angabe "verbindbar" insbesondere in der Form "elektrisch leitend verbindbar" verwendet wird, so verweist diese Angabe nicht auf die triviale Möglichkeit, die im Zusammenhang mit der Angabe bezeichneten Bestandteile des Wechselrichters auf irgendeine Weise (elektrisch leitend) miteinander zu verbinden. Vielmehr ist mit der Angabe gemeint, dass bei dem Wechselrichter die jeweilige Verbindung bereits angelegt ist und nur noch - beispielsweise durch Schließen eines Schalters oder das elektrisch leitend Werden einer Diode - umgesetzt werden muss, auch wenn dies im Einzelfall nicht explizit zur näheren Erläuterung der "Verbindbarkeit" ausgeführt ist.

### STAND DER TECHNIK

Ein transformatorloser Wechselrichter zur Einspeisung elektrischer Energie von einer Gleichstromquelle in ein Wechselstromnetz ist in der nachveröffentlichten EP 2 023 475 A1 beschrieben. Hier liefert der DC/DC-Wandler wenigstens zwei bipolare Ausgangsspannungen, die zwischen den Eingangsleitungen des Wechselrichters relativ zu einem geerdeten Mittelpunkt additiv überlagert werden. Konkret ist jeder Resonanzkreis verzweigt und weist zwei Teilresonanzkapazitäten auf, die ausgangsseitig jeweils an zwei Gleichrichterdioden angeschlossen sind und über diese wechselweise elektrisch leitend mit den Leitungen eines Teils eines geteilten Zwischenkreises verbunden werden, an den die Wechselrichterbrücke angeschlossen ist. Auf diese Weise weist der bekannte Wechselrichter ein Grundübersetzung für die zwischen den Eingangsleitungen des Wechselrichters anliegende Gleichspannung in eine an den Eingangsleitungen der Wechselrichterbrücke anliegende Zwischenkreisgleichspannung von 1:n auf, wobei n die Anzahl der Teilresonanzkapazitäten ist, zu denen die Resonanzkreise insgesamt verzweigt sind. Anders gesagt entspricht n der Anzahl der Teile des geteilten Zwischenkreises, aus dem die Wechselrichterbrücke gespeist wird. Diese Grundübersetzung der Eingangsgleichspannung erweist sich als ungünstig, wenn der bekannte Wechselrichter zur Einspeisung von elektrischer Energie von einem Photovoltaikpaneel in ein Wechselstromnetz verwendet werden soll, wobei die von dem Photovoltaikpaneel bereitgestellte Gleichspannung bereits größer oder zumindest annähernd so groß ist wie die Scheitelspannung des Wechselstromnetzes. Heute übliche Photovoltaikpaneele stellen zum Teil so hohe Gleichspannungen bereit, dass die Scheitelspannung eines zu speisenden Wechselstromnetzes häufig um ein Mehrfaches überschritten wird.

Bei dem aus der EP 2 023 475 A1 bekannten transformatorlosen Wechselrichter weisen nicht alle Ausführungsformen eine galvanische Trennung zwischen den Eingangsleitungen des Wechselrichters und den Eingangsleitungen der Wechselrichterbrücke auf. Bei einigen Ausführungsformen ist vielmehr eine über den Zwischenkreis hinweggehende Erdung des Mittelpunktes des geteilten Zwischenkreises und einer der Eingangsleitungen des Wechselrichters vorgesehen. In dem Oberbegriff des unabhängigen Patentanspruchs 1 entsprechenden Ausführungsformen des bekannten Wechselrichters ist der Mittelpunkt des geteilten Zwischenkreises, der über Kapazitäten an die Eingangleitungen der Wechselrichterbrücke angeschlossen ist, an einen Mittelpunkt zwischen den Eingangsleitungen des Wechselrichters angeschlossen, der ebenfalls über Kapazitäten an diese Eingangleitungen angeschlossen ist. Über diesen Anschluss wird ein passiver Wechselstromrückflusspfad bereitgestellt, der aufgrund der seines rein kapazitiven Anschlusses an die Eingangsleitungen des Wechselrichters die galvanische Trennung zwischen den Eingangsleitungen des Wechselrichters und den Eingangsleitungen der Wechselrichterbrücke nicht beseitigt.

Bei den Ausführungsformen des aus der EP 2 023 475 A1 bekannten transformatorlosen Wechselrichters, bei denen die Eingangsleitungen des Wechselrichters von den Eingangsleitungen der Wechselrichterbrücke galvanisch getrennt sind, kann für die Eingangsgleichspannung ein freies Bezugspotential gewählt werden. Dabei besteht aber die Gefahr, dass sich die Stromsumme der über den Resonanzkreis und den passiven Wechselstromrückflusspfad fließenden Ströme nicht zu null ausgleicht und so in unerwünschter Weise auch größere Ausgleichsströme über Erde fließen.

Aus der GB 2 419 968 A ist ein weiterer transformatorloser Wechselrichter zur Einspeisung elektrischer Energie von einer Gleichstromquelle in ein Wechselstromnetz bekannt, der eine Wechselrichterbrücke und einen der Wechselrichterbrücke vorgeschalteten DC/DC-Wandler aufweist, wobei der DC/DC-Wandler eine zwischen zwei Eingangsleitungen des Wechselrichters anliegende Eingangsgleichspannung in eine zwischen zwei Eingangsleitungen der Wechselrichterbrücke anliegende Zwischenkreisgleichspannung umwandelt und wobei die Wechselrichterbrücke die an ihren Eingangsleitungen anliegende Zwischenkreisgleichspannung in eine Ausgangswechselspannung umrichtet.

Die WO 01/80411 A1 offenbart ein Schaltnetzteil, das eine Eingangsschaltung zum periodischen Ein- und Ausschalten einer Eingangsspannung bzw. eines Eingangsstroms mit einer Schaltfrequenz, eine daran angeschlossene Übertragungsschaltung und eine an diese angeschlossene Ausgangsschaltung aufweist, an die eine Last anschließbar ist. Schaltnetzteile sind spezielle Netzteile, welche aus dem Wechselstromnetz eine oder mehrere Gleich- oder Wechselspannungen entsprechender Größe ableiten und für die Versorgung elektronischer Geräte notwendig sind. Die Übertragungsschaltung des bekannten Schaltnetzteils wird durch einen aus zumindest einer Kapazität und zumindest einer Induktivität aufgebauten Bandpass gebildet, dessen Resonanzfrequenz außerhalb der Schaltfrequenz der Eingangsschaltung liegt. Gewissermaßen wird zur Übertragung des durch die Eingangsschaltung "zerhackten" Signals eine frequenzselektive Schaltung anstelle eines bei Netzteilen sonst üblichen Transformators eingesetzt. Der Bandpass bewirkt eine Spitzenstrombegrenzung durch die Summe der Scheinwiderstände. Bei dem Bandpass handelt es sich um einen Serienschwingkreis. Allerdings handelt es sich nicht um einen Serienschwingkreis im herkömmlichen Sinn, da eine Schwingung nicht erwünscht und durch die externe Beschaltung auch nicht möglich ist. Vielmehr wird die Serienschaltung des Kondensators und der Spule außerhalb der Resonanzfrequenz betrieben.

Ein transformatorloser Wechselrichter mit den Merkmalen des Oberbegriffs des unabhängigen Patentanspruchs 1 ist aus der EP 1 143 594 A2 bekannt.

### AUFGABE DER ERFINDUNG

Der Erfindung liegt die Aufgabe zugrunde, einen transformatorlosen Wechselrichter mit den Merkmalen des Oberbegriffs des unabhängigen Patentanspruchs 1 so weiter zu entwickeln, dass er besser an Gleichstromquellen, die im Vergleich zur Scheitelspannung des zu speisenden Wechselstromnetzes hohe Gleichspannungen bereitstellen, angepasst ist und darüber hinaus sowohl weitere Anpassungsmöglichkeiten bietet als auch die weiteren Nachteile des bekannten Wechselrichters beseitigt.

### LÖSUNG

Die Aufgabe der Erfindung wird durch einen transformatorlosen Wechselrichter mit den Merkmalen des Patentanspruchs 1 gelöst. Bevorzugte Ausführungsformen des neuen Wechselrichters sind in den abhängen Patentansprüchen definiert.

### BESCHREIBUNG DER ERFINDUNG

Bei dem neuen transformatorlosen Wechselrichter ist der Resonanzkreis ungeteilt und wechselweise mit den beiden Eingangsleitungen der Wechselrichterbrücke elektrisch leitend verbindbar. Das heißt, auch der Zwischenkreis des neuen Wechselrichters ist ungeteilt. Dies ist gleichbedeutend damit, dass die Grundübersetzung des Wechselrichters - abgesehen von der Möglichkeit, Hochsetzsteller vorzusehen - maximal 1:1 beträgt. Er ist damit insbesondere für Gleichstromquellen geeignet, die eine hohe Eingangsgleichspannung bereitstellen. Bei dem neuen Wechselrichter ist auch das Bezugspotential für die Zwischenkreisgleichspannung frei wählbar. Die Zwischenkreisgleichspannung wird insbesondere nicht zwangsweise gegenüber einem geerdeten Mittelpunkt bereitgestellt.

Dass der Resonanzkreis ungeteilt ist, bedeutet hier nicht, dass die Resonanzkapazität nicht durch zwei oder mehr einzelne Kondensatoren bereitgestellt werden darf, die in Reihe und/oder auch parallel geschaltet sind, solange eine am Ausgang des Resonanzkreises vorgesehene Gesamtkapazität ungeteilt ist, das heißt der Resonanzkreis nicht mehrere getrennte Ausgänge mit mehreren Teilkapazitäten aufweist. Bei dem neuen Wechselrichter kann die Reihenfolge der Resonanzinduktivität und der Resonanzkapazität auch umgekehrt sein, so dass die Resonanzkapazität am Eingang und die Resonanzinduktivität am Ausgang des Resonanzkreises liegt. Auch wenn diese umgekehrte Reihenfolge in den folgenden konkreten Ausführungsbeispielen keine Berücksichtigung findet, ist sie der dort gezeigten Reihenfolge gleichwertig.

Bei dem neuen transformatorlosen Wechselrichter kann die Resonanzkapazität am Ausgang des Resonanzkreises über je eine Gleichrichterdiode an die beiden Eingangsleitungen der Wechselrichterbrücke angeschlossen sein, wobei sich eine elektrisch leitende Verbindung je nach Richtung der Potentialdifferenz über die Gleichrichterdioden passiv einstellt. Eine bessere Regelbarkeit des neuen Wechselrichters ergibt sich, wenn die Resonanzkapazität am Ausgang des Resonanzkreises wechselweise über getaktete Schalter mit den Eingangsleitungen der Wechselrichterbrücke elektrisch leitend verbindbar ist. Diesen getakteten Schaltern können Freilaufdioden parallel geschaltet sein.

Bei dem neuen Wechselrichter ist eine Kaskadierung des bislang beschriebenen Grundprinzips realisiert, indem mehrere Resonanzkreise ausgangsseitig parallel zueinander an die beiden Eingangsleitungen der Wechselrichterbrücke angeschlossen werden. Eingangsseitig sind diese Resonanzkreise dann an maximal eine der beiden Eingangsleitungen des Wechselrichters und eine oder zwei jeweils ein dazwischen liegendes Potential führende Zwischenpotentialleitungen über je einen getakteten Schalter angeschlossen. Ab dem dritten Resonanzkreis gibt es mindesten einen, der eingangsseitig über seine beiden getakteten Schalter wechselweise mit zwei Zwischenpotentialleitungen elektrisch leitend verbindbar ist. Auch jeder solche Resonanzkreis ist ausgangsseitig wechselweise mit den beiden Eingangsleitungen der Wechselrichterbrücke elektrisch leitend verbindbar.

Bei dem neuen transformatorlosen Wechselrichter ist mindestens ein Wechselstromrückflusspfad vorgesehen, der eingangsseitig mit den Eingangsleitungen des Wechselrichters oder den Zwischenpotentialleitungen und ausgangsseitig mit den Eingangsleitungen der Wechselrichterbrücke elektrisch leitend verbunden oder verbindbar ist. Über diesen Wechselstromrückflusspfad können sich die über den DC/DC-Wandler fließenden Ströme kompensieren. Dabei ist es von grundsätzlicher Bedeutung, das heißt, zum Beispiel auch bei einem geteilten Zwischenkreis nach dem Stand der Technik von Vorteil, wenn in dem Wechselstromrückflusspfad zwischen seinen Verzweigungen zu den Eingangsleitungen des Wechselrichters einerseits und den Eingangsleitungen der Wechselrichterbrücke andererseits eine Kapazität vorgesehen ist, die die beiden genannten Verzweigungen galvanisch voneinander trennt. Diese Kapazität stellt die galvanische Trennung unabhängig davon bereit, wie die Verzweigungen des Wechselstromrückflusspfads zu den Leitungen an seiner Eingangsseite und seiner Ausgangsseite im Einzelnen ausgebildet sind.

Vorzugsweise ist bei dem neuen Wechselrichter jedem Resonanzkreis ein Wechselstromrückflusspfad zugeordnet, um den über den Resonanzkreis abfließenden Strom möglichst vollständig zurückzuführen. Jeder dieser Resonanzkreise ist eingangsseitig und ausgangsseitig mit denselben Leitungen elektrisch leitend verbunden oder verbindbar, mit denen der zugehörige Resonanzkreis elektrisch leitend verbindbar ist.

Zwar kann der Wechselstromrückflusspfad eingangsseitig mit den Eingangsleitungen des Wechselrichters bzw. den Zwischenpotentialleitungen und ausgangsseitig mit den Eingangsleitungen der Wechselrichterbrücke jeweils über zwei Kapazitäten verbunden sein. Auf diese Weise wird ein vollkommen passiver Wechselstromrückflusspfad bereitgestellt. Dabei können mehrere derartige Wechselstromrückflusspfade ausgangsseitig über dieselben zwei Kapazitäten mit den Eingangsleitungen der Wechselrichterbrücke verbunden sein.

Bevorzugt ist es bei dem neuen Wechselrichter aber, den Wechselstromrückflusspfad ebenso wie den Resonanzkreis aktiv auszubilden, indem er zumindest eingangsseitig oder ausgangsseitig über zwei Schalter an die Eingangsleitungen des Wechselrichters oder die Zwischenpotentialleitungen bzw. die Eingangsleitungen der Wechselrichterbrücke angeschlossen ist, um weitere Möglichkeiten zur Beeinflussung der Zwischenkreisgleichspannung und des über den Zwischenkreis fließenden Stroms zu haben. Auf der jeweils anderen Seite kann der Wechselstromrückflusspfad ebenfalls über Schalter oder auch nur über Gleichrichterdioden an die Eingangsleitungen der Wechselrichterbrücke bzw. die Eingangsleitungen des Wechselrichters oder die Zwischenpotentialleitungen angeschlossen sein. Soweit hier eingangseitig oder ausgangsseitig Schalter vorgesehen sind, können diesen Freilaufdioden parallel geschaltet sein. Indem die galvanische Entkopplung bei einem erfindungsgemäßen Wechselstromrückflusspfad bereits durch die zwischen seinen eingangs- und ausgangsseitigen Verzweigungen angeordnete Kapazität bewirkt wird, können die eingangs- und ausgangsseitigen Anbindungen des Wechselstromrückflusspfads von der Aufgabe der galvanischen Entkopplung frei ausgestaltet werden.

Ganz besonders bevorzugt ist es bei dem neuen Wechselrichter, wenn in dem Wechselstromrückflusspfad zwischen seiner eingangsseitigen Verzweigung zu den Eingangsleitungen des Wechselrichters oder den Zwischenpotentialleitungen und seiner ausgangsseitigen Verzweigung zu den Eingangsleitungen der Wechselrichterbrücke nicht nur eine Kapazität sondern auch eine Resonanzinduktivität vorgesehen ist, so dass der Wechselstromrückflusspfad als weiterer Resonanzkreis ausgebildet ist. Dieser weitere Resonanzkreis kann grundsätzlich dieselben Kenngrößen wie der zugehörige Resonanzkreis aufweisen. Auch bei dem weiteren Resonanzkreis ist die Reihenfolge der Kapazität und der Resonanzinduktivität ohne eigene Bedeutung; sie kann insbesondere auch unabhängig von der Reihenfolge der Resonanzkapazität und der Resonanzinduktivität in dem zu dem jeweiligen Wechselstromrückflusspfad zugehörigen Resonanzkreis gewählt werden.

Zusätzliche Regelmöglichkeiten in Bezug auf die Zwischenkreisgleichspannung weist der neue Wechselrichter dann auf, wenn zwischen jedem Resonanzkreis und dem ihm zugeordneten Wechselstromrückflusspfad eingangsseitig nach ihrer Verzweigung zu den beiden Eingangsleitungen des Wechselrichters oder den Zwischenpotentialleitungen und/oder ausgangsseitig vor ihrer Verzweigung zu den beiden Eingangsleitungen der Wechselrichterbrücke mindestens ein getakteter Verbindungsschalter vorgesehen ist. Dabei wirkt sich eine Betätigung eines derartigen eingangsseitigen Verbindungsschalters tiefsetzstellend und eine Betätigung eines derartigen ausgangsseitigen Verbindungsschalters hochsetzstellend aus. Statt jeweils nur eines Verbindungsschalters können zum Beispiel auch zwei eingangsseitig und/oder ausgangsseitig in Reihe geschaltete Verbindungsschalter vorgesehen werden, deren Mittelpunkt mit einem Zwischenpotential verbunden ist, das durch zwischen die Eingangsleitungen des Wechselrichters bzw. der Wechselrichterbrücke in Reihe geschaltete Kapazitäten definiert ist. Dann sind die Ein- bzw. Ausgänge des Resonanzkreises und dem ihm zugeordneten Wechselstromrückflusspfads nicht nur miteinander sondern auch einzeln mit diesem Zwischenpotential verbindbar.

Auf die Eigenschaften des neuen Wechselrichters kann auch dadurch positiv Einfluss genommen werden, dass jeder Resonanzkreis und der zugehörige Wechselstromrückflusspfad ausgangsseitig vor ihrer Verzweigung zu den beiden Eingangsleitungen der Wechselrichterbrücke über eine Kapazität und/oder Induktivität miteinander verbunden sind.

In einer besonderen Ausführungsform des neuen Wechselrichters sind jeder Resonanzkreis und der zugehörige Wechselstromrückflusspfad eingangsseitig über zwei getaktete Schalter jeweils mit einer der beiden Eingangsleitungen des Wechselrichters oder einer ein dazwischen liegendes Potential führenden Zwischenpotentialleitung elektrisch leitend verbindbar, wobei in einer der Eingangsleitungen oder Zwischenpotentialleitungen ein weiterer getakteter Schalter vorgesehen ist. Auf diese Weise wird bei dem neuen Wechselrichter am Eingang des DC/DC-Wandlers eine sogenannte H5-Schaltung realisiert. Eine solche H5-Schaltung kann auch im Bereich der Wechselrichterbrücke des Wechselrichters vorgesehen sein. Ebenso können andere bekannte Schaltungskonzepte bei dem DC/DC-Wandler und der Wechselrichterbrücke Anwendung finden. So kann der DC/DC-Wandler beispielsweise ein Drei-Level NPC (Neutral Point Clamped) Converter sein. Andere anwendbare Schaltungsprinzipien sind unter den Stichworten "Heric" und "flying capacitor" bekannt.

Um dem Problem der Erdströme bei dem neuen Wechselrichter zu begegnen, kann ein über alle Resonanzkreise und Wechselstromrückflusspfade abfließender Strom, das heißt die nicht ausgeglichene Stromsumme, die sonst über Erde ausgeglichen werden müsste, mit einem Hilfswandler kompensiert werden, der einen Kompensationsstrompfad, welcher parallel zu jedem Resonanzkreis und zu jedem Wechselstromrückflusspfad verläuft und in welchem eine Kapazität angeordnet ist, über zwei getaktete Schalter wechselweise mit je einer der Eingangsleitungen des Wechselrichters oder einer ein dazwischen liegendes Potential führenden Zwischenpotentialleitung oder wechselweise mit den beiden Eingangsleitungen der Wechselrichterbrücke elektrisch leitend verbindet. Der Hilfswandler weist entsprechend eine Brücke zwischen den Eingangsleitungen des gesamten Wechselrichters oder der Wechselrichterbrücke auf. Die Ansteuerung des Hilfswandlers kann in einfacher Weise so erfolgen, dass die insgesamt über alle Resonanzkreise und Wechselstromrückflusspfade fließende Stromsumme zu null kompensiert wird, was angesichts der Tatsache, dass die über diese Strompfade fließenden Ströme hochfrequent sind, leicht beispielsweise mit einer Induktionsspule überwacht werden kann, in der ein Strom induziert wird, wenn in einem alle Strompfade umschließenden Ringkern als Stromsummenwandler ein magnetisches Wechselfeld induziert wird.

In dem Kompensationsstrompfad kann neben der Kapazität auch eine Induktivität vorgesehen sein, um die passiven Eigenschaften des Kompensationspfads abzustimmen. Eine derartige Induktivität liegt vorzugsweise auf der Seite der Kapazität, die den Schaltern des Hilfswandlers zugewandt ist.

Zusätzlich kann der Kompensationsstrompfad zur Abstimmung seiner passiven Eigenschaften auf der Seite mit den getakteten Schaltern über eine Kapazität mit einer der Eingangsleitungen des Wechselrichters oder einer ein dazwischen liegendes Potential führenden Zwischenpotentialleitung bzw. einer der Eingangsleitungen der Wechselrichterbrücke verbunden sein.

Auf der den getakteten Schaltern gegenüberliegenden Seite ist der Kompensationsstrompfad mit einer der Eingangsleitungen der Wechselrichterbrücke bzw. einer der Eingangsleitungen des Wechselrichters oder einer ein dazwischen liegendes Potential führenden Zwischenpotentialleitung verbunden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird Im Folgenden anhand verschiedener Ausführungsbeispiele des erfindungsgemäßen Wechselrichters näher erläutert und beschrieben.
- **Fig. 1**: skizziert eine Ausführungsform eines nicht unter die Patentansprüche fallenden transformatorlosen Wechselrichters, bei der der DC/DC-Wandler einen Resonanzkreis aufweist und die Wechselrichterbrücke mit einer H5-Schaltung ausgebildet ist.
- **Fig. 2**: skizziert eine eines nicht unter die Patentansprüche fallenden Abwandlung des transformatorlosen Wechselrichters gemäß Fig. 1 bezüglich des Anschlusses des Wechselstromrückflusspfads.
- **Fig. 3**: skizziert eine Ausführungsform des erfindungsgemäßen transformatorlosen Wechselrichters mit zwei parallel geschalteten Resonanzkreisen des DC/DC-Wandlers und einer in ein dreiphasiges Wechselstromnetz einspeisenden Wechselrichterbrücke.
- **Fig. 4**: skizziert eine Abwandlung des erfindungsgemäßen DC/DC-Wandlers gemäß Fig. 3.
- **Fig. 5**: skizziert eine weitere Abwandlung des erfindungsgemäßen DC/DC-Wandlers gemäß Fig. 3.
- **Fig. 6**: skizziert noch eine weitere Abwandlung des erfindungsgemäßen DC/DC-Wandlers gemäß Fig. 3, bei der neben den beiden Resonanzkreisen auch die Wechselstromrückflusspfade eingangsseitig über getaktete Schalter angeschlossen sind.
- **Fig. 7**: skizziert einen DC/DC-Wandler als Abwandlung des erfindungsgemäßen DC/DC-Wandlers gemäß Fig. 5, wobei hier insgesamt drei Resonanzkreise und zugehörige Wechselstromrückflusspfade vorgesehen sind.
- **Fig. 8**: skizziert eine Ausführungsform eines nicht unter die Patentansprüche fallenden transformatorlosen Wechselrichters mit einem Hilfswandler für die Erdstromkompensation in einer ersten Ausführungsform; und
- **Fig. 9**: skizziert eine Ausführungsform eines nicht unter die Patentansprüche fallenden transformatorlosen Wechselrichters mit einem Hilfswandler zur Erdstromkompensation in einer zweiten Ausführungsform.

### FIGURENBESCHREIBUNG

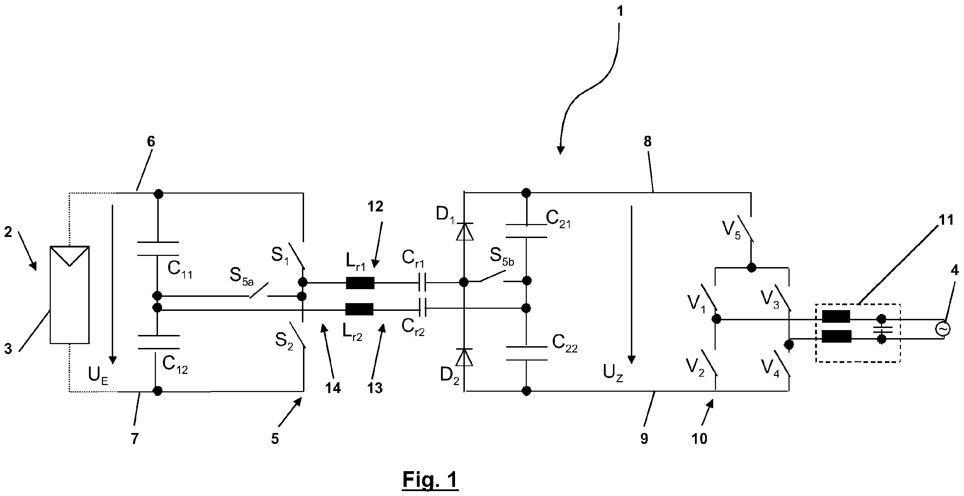

Der in **Fig. 1** skizzierte transformatorlose Wechselrichter 1 dient zum Einspeisen von elektrischer Energie von einer Gleichstromquelle 2, vorzugsweise einer Photovoltaikanlage 3, in ein hier einphasiges Wechselstromnetz 4. Der Wechselrichter 1 weist einen DC/DC-Wandler 5 auf, der eine zwischen Eingangsleitungen 6 und 7 des Wechselrichters 1 anliegende Eingangsgleichspannung U_{E} in eine Zwischenkreisgleichspannung Uz umwandelt. Die Zwischenkreisgleichspannung Uz liegt zwischen den Eingangsleitungen 8 und 9 einer Wechselrichterbrücke 10 des Wechselrichters 1 an, die unter Zwischenschaltung eines Sinusfilters 11 Wechselstrom in das Wechselstromnetz 4 einspeist. Dabei richtet die Wechselrichterbrücke 10 die Zwischenkreisgleichspannung Uz in eine Ausgangswechselspannung um. Die Wechselrichterbrücke 10 ist hier als H5-Schaltung ausgebildet und weist insgesamt fünf getaktete Schalter V₁ bis V₅ auf, die in grundsätzlich bekannter Weise angesteuert werden, um ausgehend von der Zwischenkreisgleichspannung Uz elektrische Energie in das Wechselstromnetz 4 einzuspeisen. Der DC/DC-Wandler 5 weist einen Resonanzkreis 12 mit einer Resonanzinduktivität Lᵣ₁ und einer Resonanzkapazität Cᵣ₁ auf. Eingangsseitig wird dieser Resonanzkreis 12 über zwei getaktete Schalter S₁ und S₂ wechselweise mit den Eingangsleitungen 6 und 7 des Wechselrichters 1 elektrisch leitend verbunden. Ausgangsseitig erfolgt eine wechselweise elektrisch leitende Verbindung des Resonanzkreises 12 mit den Eingangsleitungen 8 und 9 der Wechselrichterbrücke 10 über Gleichrichterdioden D₁ und D₂. Parallel, vielleicht genauer gesagt antiparallel zu dem Resonanzkreis 12 ist ein Wechselstromrückflusspfad 13 vorgesehen, der an dieselben Leitungen 6 und 7 einerseits sowie 8 und 9 andererseits angeschlossen ist wie der Resonanzkreis 12, und der es dem über den Resonanzkreis 12 abfließenden Strom erlaubt, zu der Gleichstromquelle 2 zurückzufließen. Dabei ist in dem Wechselstromrückflusspfad 13 eine Kapazität Cᵣ₂ vorgesehen, die zusammen mit der Resonanzkapazität Cᵣ₁ für eine vollständige galvanische Trennung zwischen den Eingangsleitungen 6 und 7 des Wechselrichters 1 und den Eingangsleitungen 8 und 9 der Wechselrichterbrücke 10 sorgt. Zusätzlich ergibt sich bei der Ausführungsform des Wechselrichters 1 gemäß Fig. 1 bezüglich des Wechselstromrückflusspfads 13 eine zusätzliche galvanische Trennung auf kapazitive Weise, indem der Wechselstromrückflusspfad 13 sowohl an die Eingangsleitungen 6 und 7 als auch die Eingangsleitungen 8 und 9 jeweils über zwei Kapazitäten C₁₁ und C₁₂ bzw. C₂₁ und C₂₂ angeschlossen ist. Weiterhin ist in Fig. 1 in dem Wechselstromrückflusspfad 13 eine Resonanzinduktivität Lᵣ₂ vorgesehen, die den Wechselstromrückflusspfad 13 als weiteren Resonanzkreis 14 ausgestaltet. Mit einem Schalter S₅ₐ sind der Resonanzkreis 12 und der Wechselstromrückflusspfad 13 von der Gleichstromquelle 2 aus gesehen hinter ihrer Verzweigung zu den Eingangsleitungen 6 und 7 über die Schalter S₁ und S₂ bzw. die Kapazitäten C₁₁ und C₁₂ miteinander elektrisch leitend verbindbar. Durch ein getaktetes miteinander Verbinden des Resonanzkreises 12 und des Wechselstromrückflusspfads 13 an dieser Stelle kann auf die Zwischenkreiswechselspannung Uz tiefsetzstellend eingewirkt werden, um neben der Ansteuerung der Schalter S₁ und S₂ relativ zu der Resonanzfrequenz des Resonanzkreises 12 eine weitere Anpassungsmöglichkeit des Wechselrichters 1 an die von der Gleichstromquelle 12 generierte Eingangsgleichspannung U_{E} zu schaffen. Die Grundübersetzung des Wechselrichters 1 zwischen der Eingangsgleichspannung U_{E} und der Zwischenkreisgleichspannung Uz liegt bei 1:1. Durch einen getakteten Schalter S_{5b}, mit dem der Resonanzkreis 12 und der Wechselstromrückflusspfad 13 vor ihrer ausgangsseitigen Verzweigung zu den Eingangsleitungen 8 und 9 der Wechselrichterbrücke 10 miteinander elektrisch leitend verbindbar sind, kann demgegenüber hochsetzstellend auf die Zwischenkreisgleichspannung Uz eingewirkt werden. Insgesamt weist daher bereits die Ausführungsform des Wechselrichters 1 gemäß Fig. 1 ein Vielzahl von Möglichkeiten der Einflussnahme auf die Zwischenkreisgleichspannung Uz auf.

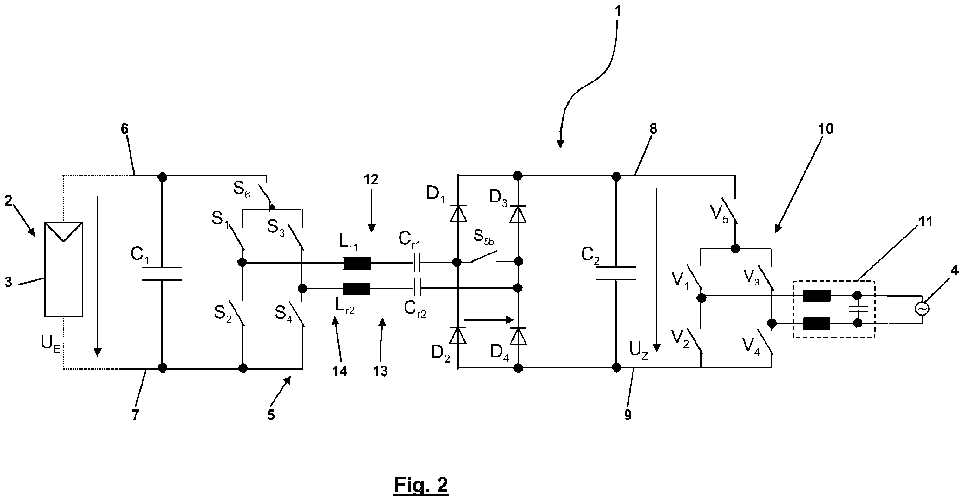

Die Ausführungsform des transformatorlosen Wechselrichters 1 gemäß **Fig. 2** unterscheidet sich von derjenigen gemäß Fig. 1 durch die Anbindung des als weiterer Resonanzkreis 14 ausgebildeten Wechselstromrückflusspfads 13. Statt über Kapazitäten ist der Wechselstromrückflusspfad 13 hier über zwei weitere getaktete Schalter S₃ und S₄ eingangsseitig an die Eingangsleitungen 6 und 7 des Wechselrichters 1 angeschlossen. Ausgangsseitig ist der Wechselstromrückflusspfad 13 über Gleichrichterdioden D₃ und D₄ an die Eingangsleitungen 8 und 9 der Wechselrichterbrücke 10 angeschlossen. Damit ist der Wechselstromrückflusspfad 13 genauso ausgebildet wie der Resonanzkreis 12. Mit den Schaltern S₁ und S₂ bzw. S₃ und S₄ werden diese beiden Resonanzkreise 12 und 14 zu gegenphasigen Schwingungen gezwungen. Zum Ausgleich für die entfallende Pufferwirkung der Kapazitäten C₁₁ und C₁₂ sowie C₂₁ und C₂₂ gemäß Fig. 1 sind bei dem Wechselrichter 1 gemäß Fig. 2 Pufferkapazitäten C₁ und C₂ zwischen den Eingangsleitungen 6 und 7 bzw. den Eingangsleitungen 8 und 9 vorgesehen. Indem auch der Wechselstromrückflusspfad hier zumindest einseitig durch getaktete Schalter S₃ und S₄ an die Eingangsleitungen 6 und 7 angebunden ist, besteht eine zusätzliche Möglichkeit zur Einflussnahme auf den insgesamt über den Resonanzkreis 12 und den Wechselstromrückflusspfad 13 fließenden Strom. Weiter ist in Fig. 2 statt des Schalters S₅ₐ ein Schalter S₆ vorgesehen, der ebenfalls tiefsetzstellend für die Zwischenkreisgleichspannung Uz getaktet werden kann und der die Schalter S₁ bis S₄ hier nach Art einer H5-Schaltung ergänzt.

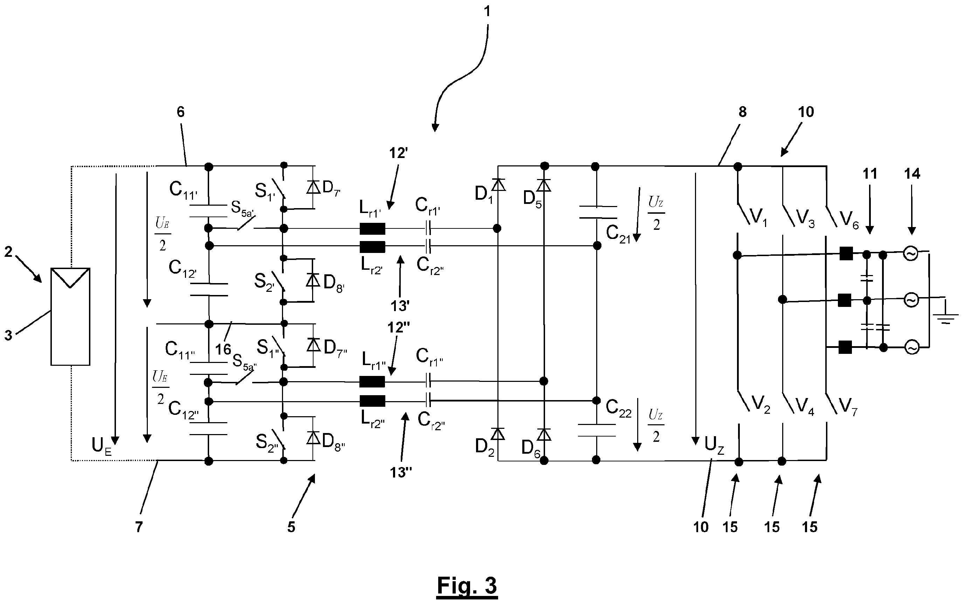

Der transformatorlose Wechselrichter 1 gemäß **Fig. 3** ist gegenüber der Ausführungsform gemäß Fig. 1 in anderen Details variiert. Hier ist zunächst das Wechselstromnetz 4, in das elektrische Energie von der Gleichstromquelle 2 eingespeist wird, ein dreiphasiges Wechselstromnetz. Entsprechend ist die Wechselrichterbrücke 10 mit drei Halbbrücken 15 ausgebildet. Den Schaltern V₁ bis V₄ sowie V₆ und V₇ der Wechselrichterbrücke 10 können Freilaufdioden parallel geschaltet sein, die aber in Fig. 3 nicht dargestellt sind. Der DC/DC-Wandler 5 weist hier zwei Resonanzkreise 12' und 12" auf, die als solche identisch aus Resonanzinduktivitäten L_{r1'} bzw. L_{r1"} und Resonanzkapazitäten C_{r1'} bzw. C_{r1"} ausgebildet sind und parallel zueinander über Gleichrichterdioden D₁ und D₂ bzw. D₅ und D₆ an die Eingangsleitungen 8 und 9 der Wechselrichterbrücke 10 angeschlossen sind. Auch den beiden Resonanzkreisen 12' und 12" jeweils zugeordnete Wechselstromrückflusspfade 13' und 13" sind ausgangsseitig, das heißt zu den Eingangsleitungen 8 und 9 der Wechselrichterbrücke 10 hin zueinander parallel geschaltet. Sie sind sogar zusammen geschlossen und über gemeinsame Kapazitäten C₂₁ und C₂₂ an diese Eingangsleitung angeschlossen. Eingangsseitig sind die Resonanzkreise 12 und die zugehörigen Wechselstromrückflusspfade 13 hier jedoch nicht an beide Eingangsleitungen 6 und 7 des Wechselrichters 1, sondern jeweils nur an eine der beiden Eingangsleitungen 6 und 7 und an eine ein zwischen den Eingangsleitungen 6 und 7 liegendes Potential führende Zwischenpotentialleitung 16 angeschlossen. An dieser Zwischenpotentialleitung 16 liegt ein durch die Kapazitäten C_{11'} und C_{12'} einerseits und C_{11"} und C_{12"} andererseits gemitteltes Potential an. Entsprechend weist der Wechselrichter 1 eine Grunduntersetzung von 2:1 auf. Weiterhin sind in Fig. 3 den Schaltern S₁ und S₂, mit denen die Resonanzkreise 12 an die Eingangsleitungen 6 und 7 bzw. die Zwischenpotentialleitung 16 angeschlossen sind, Freilaufdioden D₇ und D₈ parallel geschaltet.

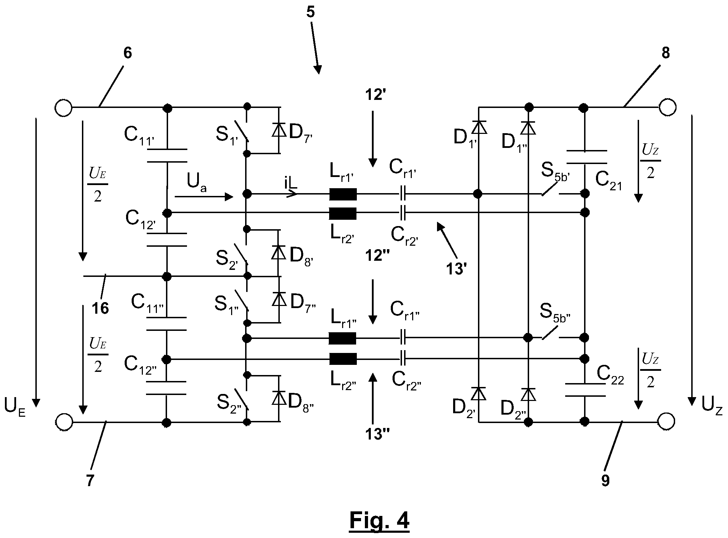

**Fig. 4** zeigt eine alternative Ausführungsform des DC/DC-Wandlers 5 gemäß Fig. 3. Während gemäß Fig. 3 Schalter S_{5a'} und S_{5a"} zum eingangsseitigen Verbinden der Resonanzkreise 12 und der zugehörigen Wechselstromrückflusspfade 13 vorgesehen waren, sind hier Schalter S_{5b'} und S_{5b"} vorgesehen, um die Resonanzkreise 12 und die zugehörigen Wechselstromrückflusspfade 13 ausgangsseitig getaktet zu verbinden. Hierdurch wird anstelle der tiefsetzstellenden Wirkung der Schalter S_{5a'} und S_{5a"} eine hochsetzstellende Wirkung auf die Zwischenkreisgleichspannung Uz ausgeübt.

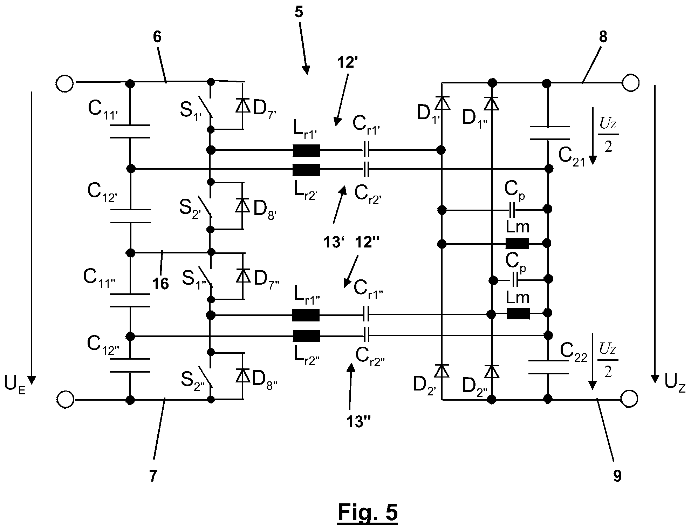

Bei der Ausführungsform des DC/DC-Wandlers 5 gemäß **Fig. 5** sind statt der Schalter S_{5b} gemäß Fig. 4 zwischen den Resonanzkreisen 12 und den zugehörigen Wechselstromrückflusspfaden 13 zusätzliche Kapazitäten Cₚ und Induktivitäten Lₘ vorgesehen, die die passiven Eigenschaften des DC/DC-Wandlers 5 positiv beeinflussen. Statt sowohl die Kapazitäten Cₚ als auch die Induktivitäten Lₘ vorzusehen, können auch nur die Kapazitäten Cₚ oder nur die Induktivitäten Lₘ vorgesehen werden. An dieser Stelle ist zu betonen, dass auch die Resonanzinduktivitäten Lᵣ₂ in den Wechselstromrückflusspfaden 13 grundsätzlich optional sind.

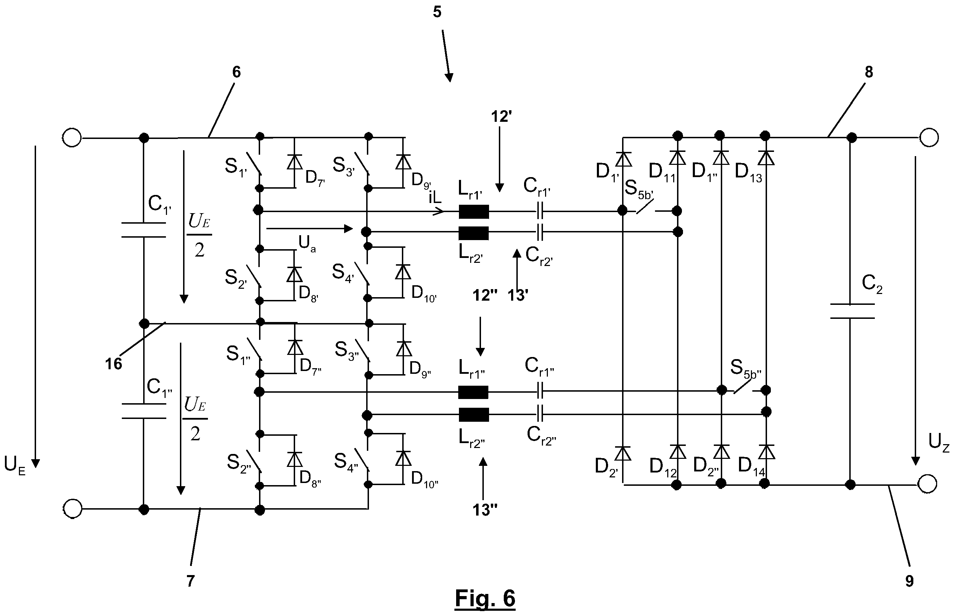

Bei dem DC/DC-Wandler gemäß **Fig. 6** sind nicht nur die Resonanzkreise 12 sondern auch die Wechselstromrückflusspfade über Schalter S an die Eingangsleitungen 6 und 7 bzw. die Zwischenpotentialleitung 16 angeschlossen. Dabei sind den Schaltern S₃ und S₄ auch hier Freilaufdioden D₉ und D₁₀ parallel geschaltet. An die Eingangsleitungen 8 und 9 sind die Wechselstromrückflusspfade 13 jeweils über zusätzliche Gleichrichterdioden D₁₁ bis D₁₄ angeschlossen. Zwischen den Eingangsleitungen 8 und 9 der hier nicht dargestellten Wechselrichterbrücke ist eine Pufferkapazität C₂ vorgesehen. Zwischen den Eingangsleitungen 6 und 7 ist eine in C_{1'} und C_{1"} aufgeteilte Pufferkapazität vorgesehen, wobei die Teilkapazitäten C_{1'} und C_{1"} das Potential zwischen den Eingangsleitungen 6 und 7 für die Zwischenpotentialleitungen 16 mitteln.

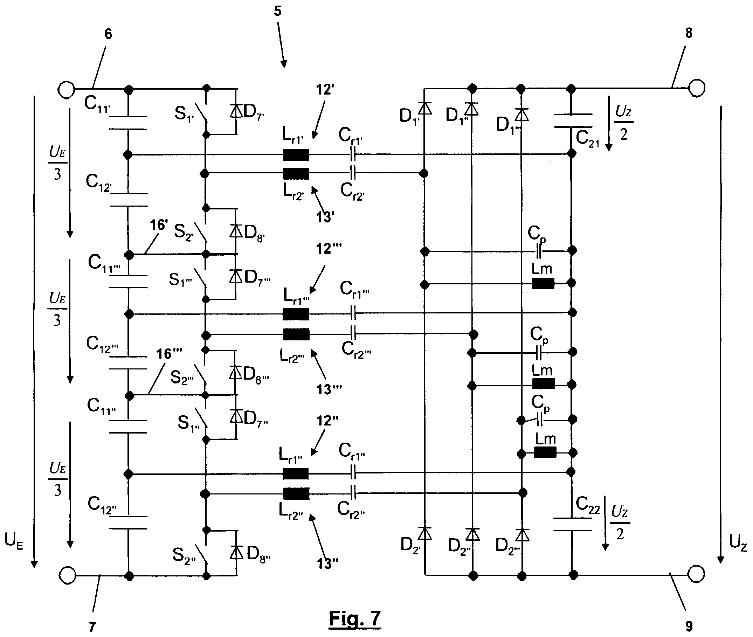

Bei der Ausführungsform des DC/DC-Wandlers 5 gemäß **Fig. 7** handelt es sich um eine Variante des DC/DC-Wandlers 5 gemäß Fig. 5, bei der statt zwei Resonanzkreisen 12 mit zugehörigen Wechselstromrückflusspfaden drei solche Resonanzkreise 12 und Wechselstromrückflusspfade 13 vorgesehen sind, so dass insgesamt eine Grundübersetzung zwischen der Eingangsgleichspannung U_{E} und der Zwischenkreisgleichspannung Uz von 3:1 erreicht wird. Dabei sind hier zwei unterschiedliche zwischen den Eingangsleitungen 6 und 7 liegende Potentiale führende Zwischenpotentialleitungen 16' und 16" vorgesehen. Der Resonanzkreis 12'" und der zugehörige Wechselstromrückflusspfad 13'" sind eingangsseitig ausschließlich an diese beiden Zwischenpotentialleitungen 16 angeschlossen.

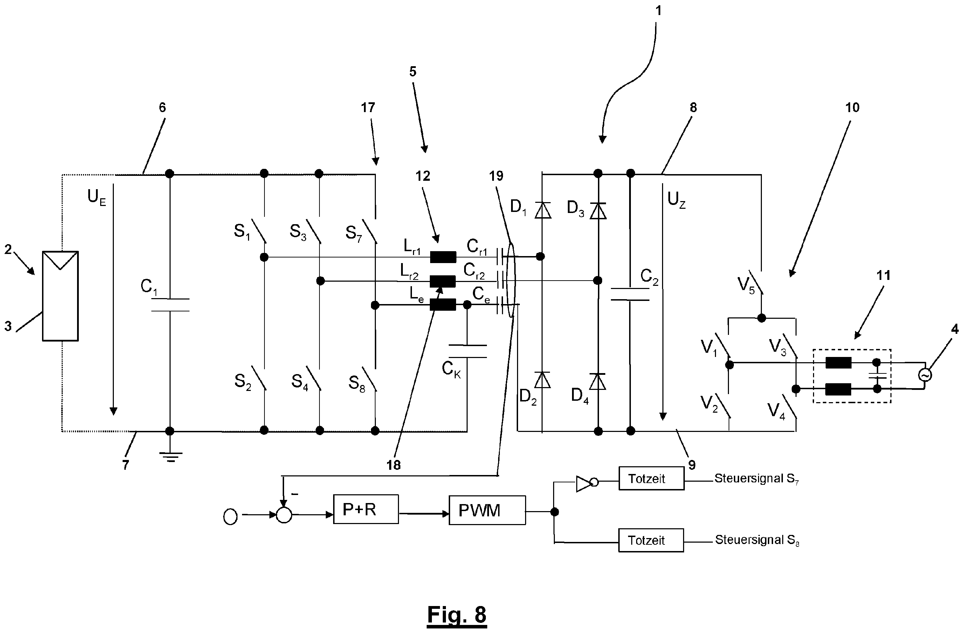

**Fig. 8** skizziert grundsätzlich den Aufbau des transformatorlosen Wechselrichters 1 gemäß Fig. 2, wobei die Schalter S₅ und S_{5b} weggelassen sind. Zusätzlich ist hier ein Hilfswandler 17 vorgesehen, um eine über den Resonanzkreis 12 und den Wechselstromrückflusspfad fließende Stromsumme zu kompensieren, damit diese keinen Strom über Erde provoziert. Der Hilfswandler weist hier zwei getaktete Schalter S₇ und S₈ auf, mit denen ein Kompensationsstrompfad 18 eingangsseitig wechselweise mit den Eingangsleitungen 6 und 7 verbunden wird. Der Kompensationsstrompfad 18 verläuft parallel zu dem Resonanzkreis 12 und dem Wechselstromrückflusspfad 13. In ihm ist eine Kapazität Cₑ angeordnet, über die er hier an die Eingangsleitung 9 der Wechselrichterbrücke 10 angeschlossen ist. Zusätzlich ist der Kompensationsstrompfad 18 über eine Kopplungskapazität C_{K} an die hier geerdete Eingangsleitung 7 angeschlossen, und in ihm ist ein Induktivität Lₑ vorgesehen. Durch die Kapazitäten Cₑ und C_{K} wir die galvanische Trennung auch längs des Kompensationsstrompfads 18 sichergestellt. In Fig. 8 ist eine Steuerung 20 für die Ansteuerung der getakteten Schalter S₇ und S₈ des Hilfswandlers 17 skizziert. Mit einem Ringkern 19 und einer hier nicht dargestellte Induktionsspule als Summenstromwandler wird ein Eingangssignal für die Steuerung 20 generiert, die die über den DC/DC-Wandler 5 fließende Stromsumme auf null regelt.

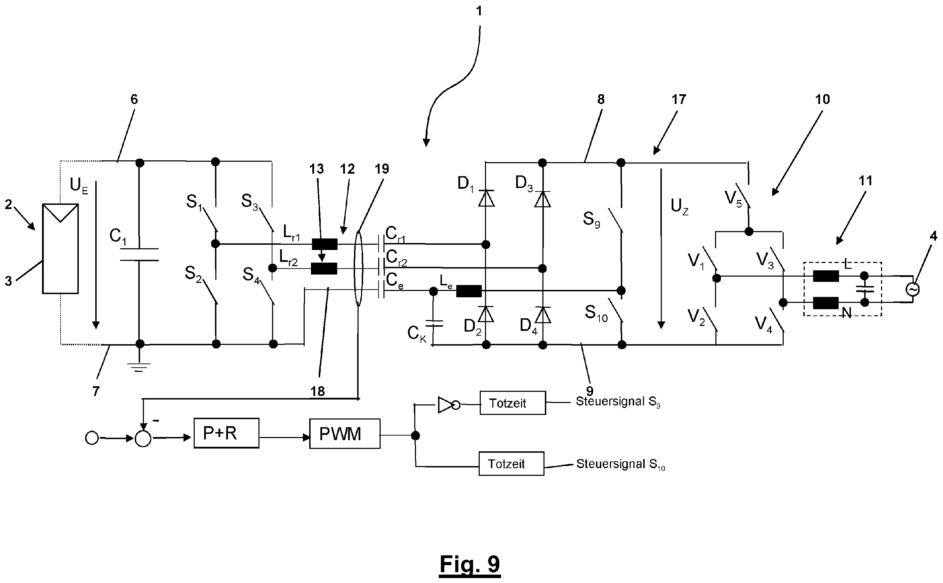

Bei der Ausführungsform des transformatorlosen Wechselrichters 1 gemäß **Fig. 9** ist anders als in Fig. 8 der Kompensationsstrompfad 18 mit dem Hilfswandler 17 über getaktete Schalter S₉ und S₁₀ an die Eingangsleitungen 8 und 9 der Wechselrichterbrücke 10 angeschlossen. Entsprechend weist er die Induktivität Lₑ ausgangsseitig der Kapazität Cₑ auf, und auch die Kopplungskapazität C_{K} ist zu der Eingangsleitung 9 der Wechselrichterbrücke 10 hin vorgesehen. Unmittelbar verbunden ist der Kompensationsstrompfad 18 hier mit der Eingangsleitung 7. Die Steuerung 20 für die Schalter S₉ und S₁₀ entspricht aber im Wesentlichen der Steuerung 20 für Schalter S₇ und S₈ gemäß Fig. 8, wobei auch hier nur eine von mehreren Möglichkeiten zur Ausführung der Steuerung 20 skizziert ist. Wenn mehrere Resonanzkreise 12 und zugehörige Wechselstromrückflusspfade 13 parallel geschaltet sind, ist vorzugsweise nur ein einziger Hilfswandler 17 und ein einziger Kompensationsstrompfad 18 vorgesehen, obwohl grundsätzlich auch je Paar aus Resonanzstromkreis 12 und zugehörigem Wechselstromrückflusspfad 13 eine solcher Kombination aus Hilfswandler 17 und Kompensationsstrompfad 18 vorgesehen werden könnte, um auch jede der über ein solches Paar fließenden Teilstromsummen auf null zu kompensieren.

### BEZUGSZEICHENLISTE

- 1: Wechselrichter
- 2: Gleichstromquelle
- 3: Photovoltaikpaneel
- 4: Wechselstromnetz
- 5: DC/DC-Wandler
- 6: Eingangsleitung
- 7: Eingangsleitung
- 8: Eingangsleitung
- 9: Eingangsleitung
- 10: Wechselrichterbrücke
- 11: Sinusfilter
- 12: Resonanzkreis
- 13: Wechselstromrückflusspfad
- 14: Resonanzkreis
- 15: Halbbrücke
- 16: Zwischenpotentialleitung
- 17: Hilfswandler
- 18: Kompensationsstrompfad
- 19: Ferritring
- 20: Steuerung

## Patentansprüche

1. Transformatorloser Wechselrichter (1) zur Einspeisung elektrischer Energie von einer Gleichstromquelle (2) in ein Wechselstromnetz (4), mit einer Wechselrichterbrücke (10) und mit einem der Wechselrichterbrücke (10) vorgeschalteten DC/DC-Wandler (5), wobei der DC/DC-Wandler (5) eine zwischen zwei Eingangsleitungen (6 und 7) des Wechselrichters anliegende Eingangsgleichspannung (U_{E}) in eine zwischen zwei Eingangsleitungen (8 und 9) der Wechselrichterbrücke (10) anliegende Zwischenkreisgleichspannung (Uz) umwandelt, wobei die Wechselrichterbrücke (10) die an ihren Eingangsleitungen (8 und 9) anliegende Zwischenkreisgleichspannung (Uz) in eine Ausgangswechselspannung umrichtet, **dadurch gekennzeichnet,**
- **dass** der DC/DC-Wandler (5) zwei jeweils eine Resonanzinduktivität (Lᵣ₁) und eine Resonanzkapazität (Cᵣ₁) aufweisende Resonanzkreise (12', 12") umfasst,
- wobei die Resonanzinduktivität (Lᵣ₁) und die Resonanzkapazität (Cᵣ₁) zwischen einem Eingang und einem Ausgang des jeweiligen Resonanzkreises (12', 12") in Reihe geschaltet sind,
- wobei der Eingang des jeweiligen Resonanzkreises (12', 12") jeweils über mindestens zwei getaktete Schalter (S₁ und S₂) einerseits mit einer der beiden Eingangsleitungen (6 und 7) des Wechselrichters und andererseits mit einer ein dazwischen liegendes Potential führenden Zwischenpotentialleitung (16) elektrisch leitend verbindbar ist und
- wobei der Ausgang des jeweiligen Resonanzkreises (12', 12") wechselweise mit den beiden Eingangsleitungen (8 und 9) der Wechselrichterbrücke (10) elektrisch leitend verbindbar ist, und
- **dass** der DC/DC-Wandler (5) mindestens einen Wechselstromrückflusspfad (13) umfasst, der eingangsseitig mit den Eingangsleitungen (6 und 7) des Wechselrichters oder den Zwischenpotentialleitungen (16) und ausgangsseitig mit den Eingangsleitungen (8 und 9) der Wechselrichterbrücke (10) elektrisch leitend verbunden oder verbindbar ist,
- wobei die Eingangsleitungen (6 und 7) des Wechselrichters und die Eingangsleitungen (8 und 9) der Wechselrichterbrücke (10) auf kapazitive Weise galvanisch voneinander getrennt sind.

2. Wechselrichter nach Anspruch 1, **dadurch gekennzeichnet, dass** jeder Resonanzkreis (12', 12") ausgangsseitig wechselweise über getaktete Schalter und/oder Gleichrichterdioden (D₁, D₂) mit den Eingangsleitungen (8, 9) der Wechselrichterbrücke (10) elektrisch leitend verbindbar ist.

3. Wechselrichter nach einem der Ansprüche 1 und 2, **dadurch gekennzeichnet, dass** neben den zwei Resonanzkreisen (12', 12") mindestens ein weiterer Resonanzkreis (12'") vorgesehen ist, der eingangsseitig über zwei getaktete Schalter (S_{1"} und S_{2"}) wechselweise mit zwei Zwischenpotentialleitungen (16' und 16") und ausgangsseitig wechselweise mit den beiden Eingangsleitungen (8 und 9) der Wechselrichterbrücke (10) elektrisch leitend verbindbar ist.

4. Wechselrichter (1) nach einem der Ansprüche 1 bis 3, **dadurch gekennzeichnet, dass** zwischen einer eingangsseitigen Verzweigung des Wechselstromrückflusspfads (13) zu den Eingangsleitungen (6 und 7) des Wechselrichters oder den Zwischenpotentialleitungen (16) und einer ausgangsseitigen Verzweigung des Wechselstromrückflusspfads (13) zu den beiden Eingangsleitungen (8 und 9) der Wechselrichterbrücke (10) eine Kapazität (Cᵣ₂) angeordnet ist.

5. Wechselrichter nach einem der Ansprüche 1 bis 4, **dadurch gekennzeichnet, dass** jedem Resonanzkreis (12) ein Wechselstromrückflusspfad (13) zugeordnet ist, der eingangsseitig und ausgangsseitig mit denselben Leitungen (6, 7, 16, 8, 9) elektrisch leitend verbunden oder verbindbar ist, mit denen der zugehörige Resonanzkreis (12) elektrisch leitend verbindbar ist.

6. Wechselrichter nach einem der Ansprüche 1 bis 5, **dadurch gekennzeichnet, dass** der Wechselstromrückflussrückpfad (13) eingangsseitig mit den Eingangsleitungen (6 und 7) des Wechselrichters (1) oder den Zwischenpotentialleitungen (16) über zwei Kapazitäten (C₁₁ und C₁₂) und ausgangsseitig mit den Eingangsleitungen (8 und 9) der Wechselrichterbrücke (10) über zwei weitere Kapazitäten (C₂₁ und C₂₂) verbunden ist.

7. Wechselrichter nach Anspruch 6, **dadurch gekennzeichnet, dass** mehrere Wechselstromrückflussrückpfade (13', 13", 13'") ausgangsseitig über dieselben zwei Kapazitäten (C₂₁ und C₂₂) mit den Eingangsleitungen (8 und 9) der Wechselrichterbrücke (10) verbunden sind.

8. Wechselrichter nach einem der Ansprüche 1 bis 5, **dadurch gekennzeichnet, dass** der Wechselstromrückflusspfad (13) eingangsseitig wechselweise mit den Eingangsleitungen (6 und 7) des Wechselrichters oder den Zwischenpotentialleitungen (16) und/oder ausgangsseitig wechselweise mit den Eingangsleitungen (8 und 9) der Wechselrichterbrücke (10) über zwei Schalter (S₃ und S₄) und auf der anderen Seite mit den Eingangsleitungen (8 und 9) der Wechselrichterbrücke (10) bzw. den Eingangsleitungen (6 und 7) des Wechselrichters oder den Zwischenpotentialleitungen (16) über zwei weitere Schalter und/oder Dioden (D₃, D₄) elektrisch leitend verbindbar ist.

9. Wechselrichter nach Anspruch 4 oder einem der auf Anspruch 4 rückbezogenen Ansprüche 5 bis 8, **dadurch gekennzeichnet, dass** der Wechselstromrückflusspfad (13) als weiterer Resonanzkreis (14) ausgebildet ist und neben der Kapazität (Cᵣ₂) eine Resonanzinduktivität (Lᵣ₂) aufweist.

10. Wechselrichter nach Anspruch 5 oder einem der auf Anspruch 5 rückbezogenen Ansprüche 6 bis 9, **dadurch gekennzeichnet, dass** zwischen jedem Resonanzkreis (12) und dem ihm zugeordneten Wechselstromrückflusspfad (13) eingangsseitig nach ihrer Verzweigung zu den Eingangsleitungen (6 und 7) des Wechselrichters oder den Zwischenpotentialleitungen (16) und/oder ausgangsseitig vor ihrer Verzweigung zu den beiden Eingangsleitungen (8 und 9) der Wechselrichterbrücke (10) mindestens ein getakteter Verbindungsschalter (S₅ₐ bzw. S_{5b}) vorgesehen ist.

11. Wechselrichter nach Anspruch 5 oder einem der auf Anspruch 5 rückbezogenen Ansprüche 6 bis 10, **dadurch gekennzeichnet, dass** jeder Resonanzkreis (12) und der zugehörige Wechselstromrückflusspfad (13) ausgangsseitig vor ihrer Verzweigung zu den beiden Eingangsleitungen (8 und 9) der Wechselrichterbrücke (10) durch eine Kapazität (Cₚ) und/oder Induktivität (Lₘ) miteinander verbunden sind.

12. Wechselrichter nach Anspruch 8, **dadurch gekennzeichnet, dass** jeder Resonanzkreis (12) und der zugehörige Wechselstromrückflusspfad (13) eingangsseitig über zwei getaktete Schalter (S₁ und S₂, S₃ und S₄) jeweils mit einer der beiden Eingangsleitungen (6 und 7) des Wechselrichters oder einer ein dazwischen liegendes Potential führenden Zwischenpotentialleitung (16) elektrisch leitend verbindbar sind, wobei in einer Eingangsleitung (6 oder 7) oder Zwischenpotentialleitung (16) ein weiterer getakteter Schalter (S₆) vorgesehen ist.

13. Wechselrichter nach Anspruch 4 oder einem der auf Anspruch 4 rückbezogenen Ansprüche 6 bis 12, **dadurch gekennzeichnet, dass** ein Hilfswandler (17) vorgesehen ist, der einen über alle Resonanzkreise (12) und Wechselstromrückflusspfade (13) abfließenden Strom kompensiert, indem er einen Kompensationsstrompfad (18), der parallel zu jedem Resonanzkreis (12) und zu jedem Wechselstromrückflusspfad (13) verläuft und in dem eine Kapazität (Cₑ) angeordnet ist, über zwei getaktete Schalter (S₇, S₈ bzw. S₉, S₁₀) wechselweise mit je einer der Eingangsleitungen (6, 7) des Wechselrichters (1) oder einer ein dazwischen liegendes Potential führenden Zwischenpotentialleitung (16) oder wechselweise mit den beiden Eingangsleitungen (8 und 9) der Wechselrichterbrücke (10) elektrisch leitend verbindet, wobei der Kompensationsstrompfad (18) auf der den getakteten Schaltern (S₇, S₈; S₉, S₁₀) gegenüberliegenden Seite mit einer der Eingangsleitungen (8, 9) der Wechselrichterbrücke (10) bzw. einer der Eingangsleitungen (6, 7) des Wechselrichters oder einer ein dazwischen liegendes Potential führenden Zwischenpotentialleitung (16) verbunden ist.

14. Wechselrichter nach Anspruch 13, **dadurch gekennzeichnet, dass** in dem Kompensationsstrompfad (18) eine Induktivität (Lₑ) vorgesehen ist und dass der Kompensationsstrompfad (18) auf der Seite mit den getakteten Schaltern (S₇, S₈; S₉, S₁₀) über eine Kopplungskapazität (C_{K}) mit einer der Eingangsleitungen (6, 7) des Wechselrichters oder einer ein dazwischen liegendes Potential führenden Zwischenpotentialleitung (16) bzw. einer der Eingangsleitungen (8, 9) der Wechselrichterbrücke (10) verbunden ist.

## Claims

1. A transformerless inverter (1) for feeding electrical energy from a direct current source (2) into an alternating current grid (4), with an inverter bridge (10) and with a DC/DC converter (5) connected upstream of the inverter bridge (10), the DC/DC converter (5) converting a DC input voltage (UE) applied between two input lines (6 and 7) of the inverter into a DC link voltage (UZ) applied between two input lines (8 and 9) of the inverter bridge (10), the inverter bridge (10) converting the DC link voltage (UZ) applied at its input lines (8 and 9) into an AC output voltage, **characterized**
- **in that** the DC/DC converter (5) comprises two resonant circuits (12', 12") each comprising a resonant inductance (Lr1) and a resonant capacitance (Cr1),
- wherein the resonant inductance (Lr1) and the resonant capacitance (Cr1) are connected in series between an input and an output of the respective resonant circuit (12', 12"),
- wherein the input of the respective resonant circuit (12', 12") in each case is electrically conductively connectable via at least two clocked switches (S1 and S2) to one of the two input lines (6 and 7) of the inverter on the one hand and to an intermediate potential line (16) carrying an intermediate potential in between on the other hand, and
- wherein the output of the respective resonant circuit (12', 12") is alternately connectable to the two input lines (8 and 9) of the inverter bridge (10) in an electrically conductive manner, and
- **in that** the DC/DC converter (5) comprises at least one alternating current return path (13) which is electrically conductively connected or connectable on the input side to the input lines (6 and 7) of the inverter or the intermediate potential lines (16) and on the output side to the input lines (8 and 9) of the inverter bridge (10),
- wherein the input lines (6 and 7) of the inverter and the input lines (8 and 9) of the inverter bridge (10) are galvanically separated from each other in a capacitive manner.

2. The inverter according to claim 1, **characterized in that** each resonant circuit (12', 12") on the output side can be connected alternately to the input lines (8, 9) of the inverter bridge (10) in an electrically conductive manner via clocked switches and/or rectifier diodes (D1, D2).

3. The inverter according to one of claims 1 and 2, **characterized in that** at least one further resonant circuit (12', 12") is provided in addition to the two resonant circuits (12', 12"), which can be electrically conductively connected alternately to two intermediate potential lines (16' and 16") via two clocked switches (S1" and S2") on the input side and alternately to the two input lines (8 and 9) of the inverter bridge (10) on the output side.

4. The inverter (1) according to one of claims 1 to 3, **characterized in that** a capacitor (Cr2) is arranged between an input-side branch of the alternating current return path (13) to the input lines (6 and 7) of the inverter or the intermediate potential lines (16) and an output-side branch of the alternating current return path (13) to the two input lines (8 and 9) of the inverter bridge (10).

5. The inverter according to one of claims 1 to 4, **characterized in that** an alternating current return path (13) is assigned to each resonant circuit (12), which can be electrically conductively connected or is connected on the input and output sides to the same lines (6, 7, 16, 8, 9) to which the associated resonant circuit (12) can be electrically conductively connected.

6. The inverter according to one of claims 1 to 5, **characterized in that** the alternating current return path (13) is connected on the input side to the input lines (6 and 7) of the inverter (1) or the intermediate potential lines (16) via two capacitors (C11 and C12) and on the output side to the input lines (8 and 9) of the inverter bridge (10) via two further capacitors (C21 and C22).

7. The inverter according to claim 6, **characterized in that** several alternating current return paths (13', 13", 13'") are connected to the input lines (8 and 9) of the inverter bridge (10) via the same two capacitors (C21 and C22) on the output side.

8. The inverter according to one of claims 1 to 5, **characterized in that** the alternating current return path (13) alternately on the input side with the input lines (6 and 7) of the inverter or the intermediate potential lines (16) and/or on the output side alternately with the input lines (8 and 9) of the inverter bridge (10) via two switches (S3 and S4) and on the other side with the input lines (8 and 9) of the inverter bridge (10) or the input lines (6 and 7) of the inverter or the intermediate potential lines (16) can be electrically connected via two further switches and/or diodes (D3, D4).

9. The inverter according to claim 4 or one of the claims 5 to 8 referring back to claim 4, **characterized in that** the alternating current return path (13) is designed as a further resonant circuit (14) and has a resonant inductance (Lr2) in addition to the capacitance (Cr2).

10. The inverter according to claim 5 or one of the claims 6 to 9 referring back to claim 5, **characterized in that** at least one clocked connection switch (S5a or S5b) is provided on the input side between each resonant circuit (12) and the alternating current return path (13) assigned to it after its branching to the input lines (6 and 7) of the inverter or the intermediate potential lines (16) and/or on the output side before its branching to the two input lines (8 and 9) of the inverter bridge (10).

11. The inverter according to claim 5 or one of the claims 6 to 10 referring back to claim 5, **characterized in that** each resonant circuit (12) and the associated alternating current return path (13) are connected to one another on the output side by a capacitor (Cp) and/or inductance (Lm) before their branching to the two input lines (8 and 9) of the inverter bridge (10).

12. The inverter according to claim 8, **characterized in that** each resonant circuit (12) and the associated alternating current return path (13) can be electrically conductively connected to one of the two input lines (6 and 7) of the inverter or an intermediate potential line (16) carrying an intermediate potential lying therebetween via two clocked switches (S1 and S2, S3 and S4) on the input side, a further clocked switch (S6) being provided in an input line (6 or 7) or intermediate potential line (16).

13. The inverter according to claim 4 or one of the claims 6 to 12 referring back to claim 4, **characterized in that** an auxiliary transformer (17) is provided which compensates a current flowing off over all resonant circuits (12) and alternating current return paths (13) by providing a compensation current path (18) which runs parallel to each resonant circuit (12) and to each alternating current return path (13) and in which a capacitor (Ce) is arranged, the compensation current path (18) being electrically conductively connected via two clocked switches (S7, S8; S9, S10) alternately with one of the input lines (6, 7) of the inverter (1) or an intermediate potential line (16) carrying an intermediate potential between them or alternately with the two input lines (8 and 9) of the inverter bridge (10), wherein on the side opposite the clocked switches (S7, S8; S9, S10) the compensation current path (18) is connected to one of the input lines (8, 9) of the inverter bridge (10) or one of the input lines (6, 7) of the inverter or an intermediate potential line (16) carrying an intermediate potential in between.

14. The inverter according to claim 13, **characterized in that** an inductance (Le) is provided in the compensation current path (18) and that the compensation current path (18) is connected on the side with the clocked switches (S7, S8; S9, S10) via a coupling capacitance (CK) to one of the input lines (6, 7) of the inverter or an intermediate potential line (16) carrying an intermediate potential lying there between or one of the input lines (8, 9) of the inverter bridge (10).

## Revendications

1. Onduleur (1) sans transformateur destiné à injecter de l'énergie électrique d'une source de courant continu (2) dans un réseau à courant alternatif (4), comprenant un pont onduleur (10) et un convertisseur CC/CC (5) branché en amont du pont onduleur (10), le convertisseur CC/CC (5) convertissant une tension continue d'entrée (U_{E}) appliquée entre deux lignes d'entrée (6 et 7) de l'onduleur en une tension de circuit intermédiaire (U_{Z}) appliquée entre deux lignes d'entrée (8 et 9) du pont onduleur (10), le pont onduleur (10) convertissant la tension de circuit intermédiaire (U_{Z}) appliquée à ses lignes d'entrée (8 et 9) en une tension alternative de sortie, **caractérisé en ce**
- **que** le convertisseur CC/CC (5) comporte deux circuits résonants (12', 12") possédant chacune une inductance de résonance (Lᵣ₁) et un condensateur de résonance (Cᵣ₁),
- l'inductance de résonance (Lᵣ₁) et le condensateur de résonance (Cᵣ₁) étant branchés en série entre une entrée et une sortie du circuit résonant (12', 12") respectif,
- l'entrée du circuit résonant (12', 12") respectif pouvant être reliée électriquement, respectivement par le biais d'au moins deux commutateurs cadencés (S₁ et S₂), d'un côté à l'une des deux lignes d'entrée (6 et 7) de l'onduleur et de l'autre côté à une ligne de potentiel intermédiaire (16) conduisant un potentiel qui se trouve entre elles et
- la sortie du circuit résonant (12', 12") respectif pouvant être reliée de manière électriquement conductrice en alternance aux deux lignes d'entrée (8 et 9) du pont onduleur (10), et
- **que** le convertisseur CC/CC (5) comporte au moins un chemin de retour de courant alternatif (13) qui du côté de l'entrée est ou peut être relié de manière électriquement conductrice aux lignes d'entrée (6 et 7) de l'onduleur ou aux lignes de potentiel intermédiaire (16) et du côté de la sortie aux lignes d'entrée (8 et 9) du pont onduleur (10),
- les lignes d'entrée (6 et 7) de l'onduleur et les lignes d'entrée (8 et 9) du pont onduleur (10) étant isolées galvaniquement l'une de l'autre de manière capacitive.

2. Onduleur selon la revendication 1, caractérisé en ce du côté de que la sortie, chaque circuit de résonance (12', 12") peut être relié de manière électriquement conductrice en alternance, par le biais de commutateurs cadencés et/ou de diodes de redressement (D₁, D₂), aux lignes d'entrée (8, 9) du pont onduleur (10).

3. Onduleur selon l'une des revendications 1 et 2, **caractérisé en ce qu'**en plus des deux circuits résonants (12', 12"), il existe au moins un circuit résonant supplémentaire (12"') qui du côté de l'entrée peut être reliée de manière électriquement conductrice, par le biais de deux commutateurs cadencés (S_{1"} et S_{2"}), en alternance à deux lignes de potentiel intermédiaire (16' et 16") et du côté de la sortie en alternance aux deux lignes d'entrée (8 et 9) du pont onduleur (10).

4. Onduleur (1) selon l'une des revendications 1 à 3, **caractérisé en ce qu'**un condensateur (Cᵣ₂) est disposé entre un point de branchement côté entrée du chemin de retour de courant alternatif (13) vers les lignes d'entrée (6 et 7) de l'onduleur ou les lignes de potentiel intermédiaire (16) et un point de branchement côté sortie du chemin de retour de courant alternatif (13) vers les deux lignes d'entrée (8 et 9) du pont onduleur (10).

5. Onduleur selon l'une des revendications 1 à 4, **caractérisé en ce qu'**un chemin de retour de courant alternatif (13) est associé à chaque circuit résonant (12), lequel est ou peut être relié de manière électriquement conductrice du côté de l'entrée et du côté de la sortie aux mêmes lignes (6, 7, 16, 8, 9) que celles auxquelles peut être relié de manière électriquement conductrice le circuit résonant (12) associé.

6. Onduleur selon l'une des revendications 1 à 5, **caractérisé en ce que** le chemin de retour de courant alternatif (13) est relié du côté de l'entrée aux lignes d'entrée (6 et 7) de l'onduleur (1) ou aux lignes de potentiel intermédiaire (16) par le biais de deux condensateurs (C₁₁ et C₁₂) et du côté de la sortie aux lignes d'entrée (8 et 9) du pont onduleur (10) par le biais de deux condensateurs supplémentaires (C₂₁ et C₂₂) .

7. Onduleur selon la revendication 6, **caractérisé en ce que** plusieurs chemins de retour de courant alternatif (13', 13", 13"') sont reliés du côté de la sortie aux lignes d'entrée (8 et 9) du pont onduleur (10) par le biais des mêmes deux condensateurs (C₂₁ et C₂₂) .

8. Onduleur selon l'une des revendications 1 à 5, **caractérisé en ce que** le chemin de retour de courant alternatif (13) peut être relié de manière électriquement conductrice du côté de l'entrée en alternance aux lignes d'entrée (6 et 7) de l'onduleur ou aux lignes de potentiel intermédiaire (16) et/ou du côté de la sortie en alternance aux lignes d'entrée (8 et 9) du pont onduleur (10) par le biais de deux commutateurs (S3 et S4) et, de l'autre côté, aux lignes d'entrée (8 et 9) du pont onduleur (10) ou aux lignes d'entrée (6 et 7) de l'onduleur ou aux lignes de potentiel intermédiaire (16) par le biais de deux commutateurs supplémentaires et/ou de diodes (D₃, D₄).

9. Onduleur selon la revendication 4 ou l'une des revendications 5 à 8 faisant référence à la revendication 4, **caractérisé en ce que** le chemin de retour de courant alternatif (13) est réalisé sous la forme d'un circuit résonant (14) supplémentaire et possède, en plus du condensateur (Cᵣ₂), une inductance de résonance (Lᵣ₂).

10. Onduleur selon la revendication 5 ou l'une des revendications 6 à 9 faisant référence à la revendication 5, **caractérisé en ce qu'**au moins un commutateur de liaison cadencé (S₅ₐ ou S_{5b}) se trouve entre chaque circuit résonant (12) et le chemin de retour de courant alternatif (13) qui lui est associé, du côté de l'entrée après son point de branchement vers les lignes d'entrée (6 et 7) de l'onduleur ou les lignes de potentiel intermédiaire (16) et/ou du côté de la sortie avant son point de branchement vers les deux lignes d'entrée (8 et 9) du pont onduleur (10).

11. Onduleur selon la revendication 5 ou l'une des revendications 6 à 10 faisant référence à la revendication 5, **caractérisé en ce que** chaque circuit résonant (12) et le chemin de retour de courant alternatif (13) associé sont reliés l'un à l'autre par un condensateur (Cₚ) et/ou une inductance (Lₘ) du côté de la sortie avant leur point de branchement vers les deux lignes d'entrée (8 et 9) du pont onduleur (10).

12. Onduleur selon la revendication 8, **caractérisé en ce que** chaque circuit résonant (12) et le chemin de retour de courant alternatif (13) associé peuvent être reliés de manière électriquement conductrice du côté de l'entrée, par le biais de deux commutateurs cadencés (S1 et S2, S3 et S4) respectivement à l'une des deux lignes d'entrée (6 et 7) de l'onduleur ou une ligne de potentiel intermédiaire (16) conduisant un potentiel qui se trouve entre elles, un commutateur cadencé supplémentaire (S₆) se trouvant dans une ligne d'entrée (6 ou 7) ou une ligne de potentiel intermédiaire (16).

13. Onduleur selon la revendication 4 ou l'une des revendications 6 à 12 faisant référence à la revendication 4, **caractérisé en ce qu'**il existe un convertisseur auxiliaire (17) qui compense un courant s'échappant par le biais de tous les circuits résonants (12) et chemins de retour de courant alternatif (13) **en ce qu'**il relie de manière électriquement conductrice un chemin de courant de compensation (18), lequel s'étend en parallèle de chaque circuit résonant (12) et de chaque chemin de retour de courant alternatif (13) et dans lequel est disposé un condensateur (Cₑ), le chemin de courant de compensation (18) étant relié par le biais de deux commutateurs cadencés (S₇, S₈ ou S₉, S₁₀) en alternance respectivement à l'une des lignes d'entrée (6, 7) de l'onduleur (1) ou une ligne de potentiel intermédiaire (16) conduisant un potentiel qui se trouve entre elles ou, en alternance aux deux lignes d'entrée (8 et 9) du pont onduleur (10), le chemin de courant de compensation (18) étant relié, sur le côté opposé aux commutateurs cadencés (S₇, S₈ ; S₉, S₁₀), à l'une des lignes d'entrée (8, 9) du pont onduleur (10) ou l'une des lignes d'entrée (6, 7) de l'onduleur ou une ligne de potentiel intermédiaire (16) conduisant un potentiel qui se trouve entre elles.

14. Onduleur selon la revendication 13, **caractérisé en ce qu'**une inductance (Lₑ) se trouve dans le chemin de courant de compensation (18) et **en ce que** le chemin de courant de compensation (18), du côté qui comporte les commutateurs cadencés (S₇, S₈ ; S₉, S₁₀), est relié par le biais d'un condensateur de couplage (C_{K}) à l'une des lignes d'entrée (6, 7) de l'onduleur ou une ligne de potentiel intermédiaire (16) conduisant un potentiel qui se trouve entre elles ou encore l'une des lignes d'entrée (8, 9) du pont onduleur (10).
